# FASCICULE DE BREVET EUROPEEN

(11) **EP 0 489 626 B1**
(45) Date de publication et mention de la délivrance du brevet: **30.03.1994**
(21) Numéro de dépôt: 91403227.1
(22) Date de dépôt: 28.11.1991
(51) Int. Cl.: C02F 3/06, C02F 3/30, B01D 29/88, C02F 3/10

(54) **Réacteur d'oxydation et de réduction biologique, procédé de biofiltration et procédés de lavage mis en oeuvre dans ce réacteur**
Reaktor für biologische Oxydation und Reduktion; Verfahren für biologische Filtration und Verfahren zum Spülen des Reaktors
Reactor for biological oxidation and reduction; process for biofiltration and process for rinsing the reactor

(30) Priorité: 03.12.1990 FR 9015088
(43) Date de publication de la demande: 10.06.1992
(73) Titulaire: DEGREMONT, 92508 Rueil-Malmaison Cédex (FR)
(72) Inventeur: Savall, Vincent, F-78140 Velizy Villacoublay (FR); Vital, Jean-Louis, F-92100 Boulogne (FR)
(74) Mandataire: Debay, Yves

(56) Documents cités:
- DE-A- 3 408 826
- FR-A- 2 557 558
- FR-A- 2 604 990
- FR-A- 2 624 847
- FR-A- 2 632 947
- GB-A- 2 021 428
- JP-A-60 187 396
- JP-A-61 138 592
- US-A- 3 741 025
- PATENT ABSTRACTS OF JAPAN vol. 5, no. 194 (C-82)(866) 10 Décembre 1981 & JP-A-56 113 399
- Catalogue de la société Krause, 1984, "Crépines filtrantes"
- Memento Technique de l'Eau, Degrémont, 1989, p.121-148, p.731-737

## Description

La présente invention concerne un réacteur d'oxydation et de réduction biologique, un procédé de filtration et des procédés de lavage mis en oeuvre dans ce réacteur.

Un tel réacteur d'oxydation et de réduction s'applique en particulier à l'élimination de l'azote présent sous forme organique et ammoniacale dans les eaux résiduaires urbaines et les eaux résiduaires industrielles. L'oxydation permet de transformer l'azote ammoniacal en nitrite puis en nitrate et la réduction permet de transformer l'azote nitrique en azote. De telles réactions s'obtiennent par la mise en oeuvre de cultures bactériennes qui peuvent s'effectuer selon deux procédés, l'un dit à cultures libres et l'autre dit à cultures fixées.

Dans les techniques de l'art antérieur à cultures fixées, on utilise la capacité qu'ont la plupart des micro-organismes à produire des exopolymères permettant leur fixation sur des supports très divers, pour former un biofilm. Les cultures fixées, comme les cultures libres, peuvent s'utiliser en traitements aérobies ou anaérobies (biofiltres à milieu granulaire fin, lits bactériens, disques biologiques,...).

Les cultures fixées permettent d'obtenir dans les réacteurs des concentrations en biomasse (et parfois des activités) plus importantes, ce qui permet de réduire la taille des ouvrages.

On a proposé de fixer les micro-organismes sur des supports granulaires de taille effective inférieure à 4 ou 5 mm, ces supports assurant une surface spécifique développée (et par conséquent une surface d'échange) très supérieure à celle des autres procédés. A titre d'exemple, une BIOLITE de taille effective 2,7 mm développe une surface d'échange de 700 m² .m⁻³.

Schématiquement, ces bioréacteurs à milieu granulaire peuvent se diviser en deux grandes catégories:
- Ceux dans lesquels, parallèlement à l'épuration biologique, on assure la rétention des matières en suspension initialement présentes dans l'effluent brut ainsi que les boues en excès produites. Ce sont les lits granulaires fixes appelés aussi biofiltres.
- Ceux dans lesquels le bioréacteur n'assure que l'épuration biologique, la séparation des matières en suspension étant assurée par un ouvrage placé en aval. Dans ce dernier cas, afin d'optimiser les surfaces d'échanges micro-organismes/substrat, on travaille avec des matériaux granulaires très fins mis en mouvement. Ce sont les lits granulaires fluidisés, comme enseigné dans les brevets US 3 846 289 et 4 009 099 (Ecolotrol dénitrification et nitrification).

Dans le cas de la deuxième catégorie, les réacteurs à lit fluidisé présentent l'inconvénient de lier la vitesse de circulation du fluide aux caractéristiques hydrauliques (vitesse de fluidisation, etc,...) du matériau granulaire choisi comme support. Par ailleurs, les lits fluidisés ne permettent pas de maintenir de façon sûre et permanente deux zones séparées, l'une d'oxydation, l'autre de réduction dans le même lit sans risque de mélange des matériaux et des bactéries retenues sur ces matériaux lors des variations de débit.

Dans la première catégorie, les "lits granulaires fixes" décrits ci-dessus sont réalisés classiquement avec des matériaux plus denses que l'eau. On parlera dans ce cas de "lit coulant". Si le matériau est moins dense que l'eau, on parlera de "lit flottant".

Le brevet FR 2 604 990 (OTV) décrit un appareil comportant un lit coulant composé d'au moins deux couches de matériau granulaire. Deux zones, l'une aérobie et l'autre anaérobie, sont prévues au sein de ce lit. Ce procédé présente plusieurs inconvénients :
les granulométries des matériaux des deux zones doivent être choisies de façon à éviter le mélange des grains des zones contiguës ;
le lavage nécessite de grandes vitesses d'eau mais il n'est pas prévu néanmoins de reclassement des différentes couches, au cas où un mélange des zones se serait produit.

Des appareils utilisant des lits flottants ont été proposés :

Par exemple, le brevet FR 2 330 652 (Preussag) propose d'utiliser un matériau flottant du type polystyrène expansé pour réaliser un réacteur biologique de dénitrification. Mais ce procédé ne permet pas de réaliser la réaction biologique de nitrification, puisqu'il comporte uniquement une zone adaptée à une réaction de réduction (dénitrification). Ce dispositif nécessite à la partie supérieure une importante chambre d'accumulation d'eau de lavage pour permettre un lavage à courant descendant.

Plusieurs brevets décrivent des appareils comportant deux couches de matériaux différents dans le réacteur :
- Le brevet FR 2 278 378 (Erpac) propose de faire traverser successivement une couche de lit flottant puis deux couches de lit coulant avec pour objectif de réaliser une filtration, mais ne permet pas de concevoir un réacteur biologique parce qu'il n'y a pas d'injection d'air. Il présente l'inconvénient de comporter plusieurs organes de supportage et de rétention ou de compactage du matériau. Par ailleurs, les conditions de lavage des différents lits ne sont pas favorables.
- Le brevet GB 2 021 428 (Ishigaki Kiko) comporte une couche à lit flottant et une couche supérieure à lit coulant séparées par une paroi intermédiaire. Comme le brevet précédent, il ne permet pas de concevoir un réacteur biologique permettant de réaliser une réaction d'oxydation et une réaction de réduction car il n'y a pas d'injection d'air pour la partie process et il n'y a pas introduction d'air de lavage. En effet, la couche inférieure est conçue pour la filtration et la couche supérieure pour l'adsorption physico-chimique n'est pas conçue pour effectuer un lavage.
- Le brevet FR 2 632 947 (OTV) utilise un lit constitué de couches servant de réacteur biologique. Il est envisagé d'utiliser ces couches pour la nitrification ou la dénitrification. Mais si l'on désire combiner les deux réactions de nitrification et de dénitrification au sein d'un même réacteur, les caractéristiques des matériaux des deux couches ne peuvent pas être choisies indépendamment. Les caractéristiques de ces deux couches sont liées par des contraintes dues aux conditions de lavage. En effet, le lavage se fait avec expansion car il est nécessaire de conserver le classement des différentes couches.

Par ailleurs, la circulation du gaz d'oxydation se fait dans le sens de la compression du lit, ce qui conduit à un blocage de la circulation du gaz. Ceci est d'ailleurs le problème principal auquel ce brevet veut apporter une solution en choisissant, pour la couche du bas, une densité de matériau telle que la couche soit "agitée" (le brevet dit "fluidisée"). Le matériau, tel que schiste expansé flottant ou polypropylène allégé, qui possède une telle densité n'existe d'ailleurs pas à un coût économique raisonnable à l'échelle industrielle.
Cette compression du lit n'est donc pas favorable pour la partie du lit constituant le réacteur triphasique aérobie. Ce brevet prévoit d'ailleurs d'injecter l'air de façon intermittente (le brevet dit "par pulsation") pour limiter cet inconvénient. Il y a en effet risque d'embolie gazeuse et de passage préférentiel de l'eau ou du gaz, lorsque l'encrassement progressif du lit augmente la perte de charge de circulation de l'eau.

L'inconvénient de l'art antérieur est de ne pas permettre de réaliser les réactions de nitrification et de dénitrification (ou plus généralement d'oxydation et de réduction) de façon efficace et économique dans un seul réacteur.

Un premier but de l'invention est de proposer un réacteur d'oxydation et de réduction de constitution simple et économique à réaliser, ne nécessitant aucune opération de reclassement des matériaux utilisés après un lavage et permettant de choisir les matériaux dans une plus grande plage de granulométrie et de densité.

Ce but est atteint par le fait que le réacteur d'oxydation et de réduction biologique de liquide à traiter par circulation ascendante et recirculation comprend dans une enceinte longitudinale verticale accessible par une entrée de liquide à traiter et une sortie du liquide traité situées respectivement à l'extrémité inférieure et supérieure de l'enceinte, une couche inférieure de fixation de la biomasse réalisée en matériau de densité inférieure à celle du liquide et une couche supérieure de fixation de la biomasse réalisée en matériau de densité supérieure à celle du liquide, la couche inférieure est séparée de la couche supérieure par une cloison transversale autorisant seulement le passage du liquide entre une première et une deuxième zones ainsi définies dans l'enceinte, la couche inférieure est située sous la cloison, la couche supérieure au-dessus de la cloison, une arrivée de fluide ou gaz d'oxydation (par exemple d'air) est prévue sous la couche supérieure et au-dessus de la cloison, la sortie du liquide traitée est recyclée par une pompe et une canalisation extérieure, sur l'entrée.

Selon une autre particularité de l'invention, des micro-organismes assurant l'oxydation constituent la biomasse fixée sur la couche supérieure et des bactéries assurant la réduction constituent la biomasse fixée sur la couche inférieure.

Selon une autre particularité, les micro-organismes assurant l'oxydation sont de préférences des nitrosomonas et les bactéries du genre nitrobacter.

Un autre but de l'invention est d'assurer parallèlement à l'épuration biologique une rétention des matières en suspension (MeS).

Ce but est atteint par le fait que la granulométrie du matériau de densité inférieure au liquide est choisie plus grosse que celle du matériau de densité supérieure au liquide, de façon que le lit coulant réalise un effet de filtration.

Selon une autre particularité de l'invention, le matériau granulaire du lit coulant est constitué, par exemple, par du sable, de l'anthracite, de la pierre ponce, de l'argile expansée. Sa taille effective est comprise, préférentiellement, entre 1 et 5 mm et le matériau constituant le lit flottant est constitué, par exemple, de polystyrène expansé, de polypropylène, de mousse de polyuréthanne et sa taille effective est comprise, préférentiellement, entre 1 et 5 mm, le deuxième ayant une taille plus grande que le premier.

Un autre but est de permettre le piègeage d'une partie du gaz provenant de l'épuration.

Ce but est atteint par le fait que la cloison est en matériau étanche et des buselures sont prévues à intervalles réguliers dans la cloison.

Selon une autre particularité, les buselures sont constituées d'un chapeau cylindrique supérieur, formant crépine sur sa périphérie, relié à un tube central passant à travers la cloison et débouchant dans le compartiment de l'enceinte située sous la cloison par un orifice communiquant avec le lit de matériau flottant par un deuxième chapeau cylindrique formant crépine.

Selon une autre particularité, un orifice de purge ou d'admission d'air est prévu sous la cloison entre le niveau inférieur de la cloison et le niveau de l'orifice de communication des buselures.

Selon une autre particularité, le réacteur comprend un évent en haut de l'enceinte , une vanne de sortie d'eau en haut de l'enceinte et une vanne de chasse d'eau au bas de l'enceinte.

Selon une autre particularité, le réacteur comprend une canalisation d'amenée d'air de lavage et une canalisation d'amenée d'eau de lavage débouchant dans l'enceinte approximativement au niveau de la cloison transversale.

Un autre but de l'invention est de proposer différents procédés de lavage utilisables sur le réacteur.

Ce but est atteint par le fait que le procédé de lavage d'un réacteur comprend les étapes suivantes :
- ouverture de l'évent, ouverture de la vanne d'évacuation des boues situées en bas de l'enceinte pour évacuer les boues du lit flottant.
- introduction d'eau de lavage par une canalisation d'eau de lavage ;
- puis fermeture de la vanne de l'enceinte pour évacuer vers le haut les boues du lit coulant ;

Un autre but de l'invention est de proposer un autre procédé de lavage.

Ce but est atteint par le fait que le procédé de lavage comporte les étapes suivantes :
- lavage du lit coulant avec circulation des matières en suspension vers la zone inférieure conduisant à une accumulation des matières en suspension dans le lit flottant ;
- lavage du lit flottant.

Selon une autre particularité, le lavage du lit flottant est obtenu en alimentant en eau brute la pompe, en inversant le sens de circulation dans la tuyauterie par des moyens connus et en chassant par ouverture de la vanne inférieure d'évacuation des boues pour provoquer une fluidisation.

Selon une particularité de l'invention, le lavage du lit flottant s'effectue par chasse rapide provoquant la fluidisation et le dénoyage de ce lit.

Enfin un dernier but de l'invention est de proposer un procédé de lavage comportant les étapes suivantes :
- circulation de l'eau de l'enceinte par la pompe du bas vers le haut dans la canalisation extérieure pour effectuer le lavage du lit flottant par accumulation des matières en suspension dans le lit coulant ;
- arrêt de la pompe ;
- alimentation en eau brute par la canalisation d'entrée d'eau brute à traiter ;
- alimentation en air de lavage par la canalisation d'amenée d'air de lavage ;
- ouverture de la vanne d'évacuation du trop plein d'air et d'eau ;
- fermeture de l'arrivée d'air de lavage ;
- purge de l'air de l'enceinte par ouverture de la vanne de purge ;

D'autres particularités et avantages de la présente invention apparaîtront plus clairement à la lecture de la description ci-après faite en référence aux dessins annexés dans lesquels :
- la figure 1 représente un réacteur selon l'invention ;
- la figure 2 représente une buselure utilisée dans le réacteur ;
- la figure 3 décrit le sens de circulation des fluides pendant la phase de biofiltration;
- la figure 4 décrit le sens de circulation des fluides pendant la phase de lavage du lit flottant selon une première variante ;
- la figure 5 décrit le sens de circulation des fluides pendant la phase de lavage du lit coulant selon une première variante ;
- la figure 6 donne le sens de circulation des fluides pendant le lavage du lit coulant selon la deuxième variante ;
- la figure 7 donne le sens de circulation des fluides pendant le lavage du lit flottant selon une première possibilité de la deuxième variante ;
- la figure 8 donne le sens de circulation pendant le lavage du lit flottant selon une deuxième possibilité de la deuxième variante ;
- la figure 9 donne le sens de circulation pendant le lavage du lit flottant selon une troisième variante ;
- la figure 10 représente le sens de circulation pendant la deuxième phase de lavage selon la troisième variante.

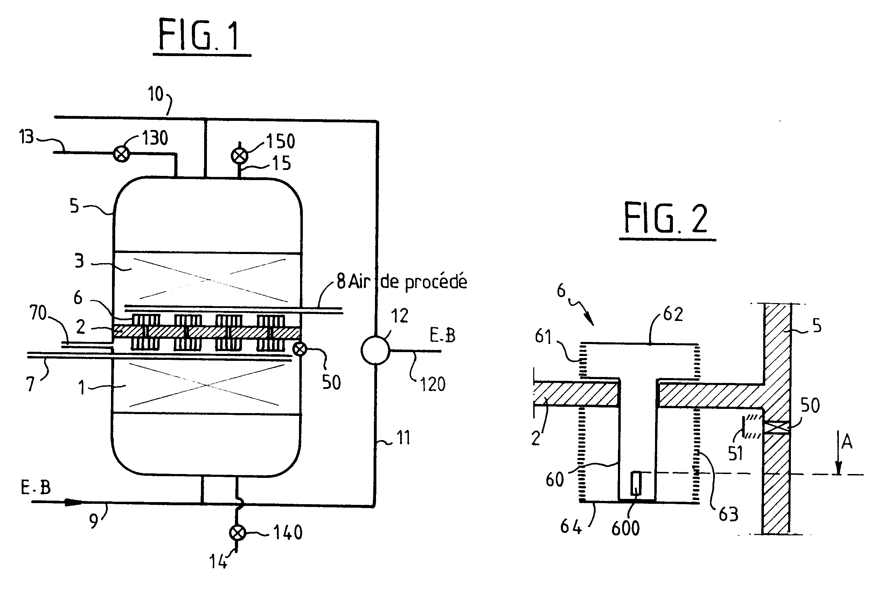

Le réacteur de la figure 1 comprend une enceinte (5) qui contient un lit flottant (1) constitué de matériau de densité inférieure à celle de l'eau, retenu par une cloison (2). Sur cette cloison (2) est monté un lit coulant (3) constitué de matériau plus dense que l'eau. Le matériau granulaire du lit coulant (3) est de densité supérieure à celle de l'eau, il peut s'agir, par exemple, de sable, d'anthracite, de pierre ponce, d'argile expansée, ... Sa taille effective peut être comprise entre 0,5 et 10 mm, préférentiellement entre 1 et 5 mm. Le matériau granulaire constituant le lit flottant (1) est de densité inférieure à celle de l'eau, il peut s'agir par exemple de polystyrène expansé, de polypropylène, de mousse de polyuréthane, ... Sa taille effective peut être comprise entre 0,5 et 10 mm, préférentiellement entre 1 et 5 mm. Les caractéristiques de granulométrie et de densité des deux matériaux sont indépendantes l'une de l'autre à la seule condition que l'un soit flottant et l'autre coulant. De façon avantageuse, la granulométrie du matériau flottant peut être choisie plus grosse que celle du matériau coulant, de façon que le lit coulant effectue en même temps que l'oxydation une opération de filtration par rétention des matières en suspension. Le choix de la granulométrie et de la densité de chacun des deux matériaux peut donc être effectué de façon optimale , d'une part pour l'obtention de l'effet support de biomasse qui doit être dénitrifiante dans le lit flottant et nitrifiante dans le lit coulant, et d'autre part pour l'obtention dans le lit coulant d'un effet de filtration. La biomasse nitrifiante est choisie de façon à oxyder l'azote ammoniacal en nitrite puis en nitrate selon la réaction ci-dessous dans laquelle les degrés d'oxydation sont indiqués en chiffres romains.

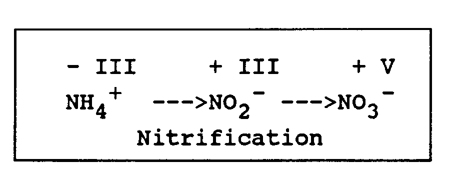

Cette réaction s'effectue en deux stades par des micro-organismes autotrophes :
- oxydation de NH₄⁺ (degré d'oxydation moins 3) en NO₂⁻ (degré d'oxydation plus 3) : c'est l'oeuvre essentiellement des germes Nitrosomonas,
- oxydation de NO₂⁻ en NO₃⁻ (degré d'oxydation plus 5) : les bactéries responsables de cette deuxième réaction appartiennent principalement au genre Nitrobacter.

La réaction globale simplifiée de la nitrification peut s'écrire :

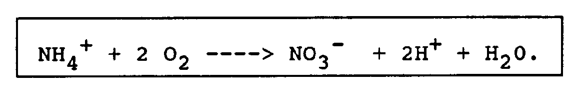

La biomasse de dénitrification produit une réduction schématisée par la réaction ci-dessous dans laquelle les degrés d'oxydation sont indiqués en chiffres romains.

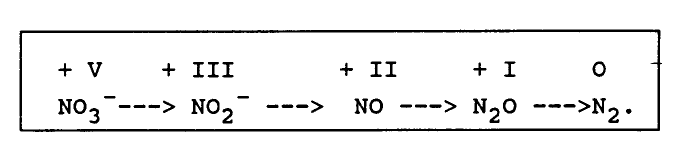

Au cours de cette réaction, certaines bactéries réduisent l'azote nitrique degré d'oxydation plus 5 à un état plus faible d'oxydation.

De préférence, on met en oeuvre des bactéries hétérotrophes d'activité plus grande que les bactéries autotrophes, de façon à réaliser la réaction globale simplifiée suivante :

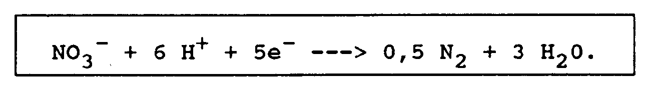

La paroi (2) est équipée de buselures (6) qui, comme représenté à la figure 2, comprennent un tube central (60) débouchant à la partie supérieure de la buselure située au-dessus de la cloison (2) par un chapeau (62) qui à sa périphérie comporte une crépine (61). Ce tube central est pourvu à sa partie inférieure située en dessous de la cloison (2) et à un niveau situé à une distance (A) de la cloison (2), une ouverture (600) qui permet d'assurer le piègeage des gaz d'azote entre la cloison (2) et le niveau (A). Le tube (60) est entouré à sa périphérie par une crépine (63) et un chapeau inférieur (64) qui permettent d'éviter la migration du matériau flottant vers la zone de nitrification. Une vanne de purge (50) reliée à une crépine (51) située à l'intérieur du réacteur est prévue dans la cloison (5) de l'enceinte entre le niveau de la cloison (2) et le niveau de l'ouverture (600), pour permettre l'évacuation des gaz accumulés au cours du processus de filtration ou du processus de lavage. Ces buselures (6) permettent, pendant le lavage, la circulation et la répartition de l'air ou de l'eau séparément ou simultanément au travers de la paroi (2). Le réacteur est équipé d'une canalisation (9) d'entrée d'eau brute et d'une canalisation (10) de sortie d'eau traitée. Une canalisation (11), munie d'une pompe (12) et de moyens permettant d'inverser le sens de circulation dans la tuyauterie (11), permet entre autre la recirculation du liquide traité du haut vers le bas de l'enceinte (5) en vue de le recycler pour la dénitrification. Une entrée (120) d'eau brute sur la pompe (12) permet à celle-ci d'envoyer de l'eau de lavage vers le haut de l'enceinte. Le sommet de l'appareil comporte une canalisation (15) équipée d'une vanne (150) permettant l'évacuation de l'air de lavage ou la mise à l'atmosphère de l'enceinte. Le réacteur est équipé d'une canalisation (8) d'amenée d'air de process associée à l'intérieur de l'enceinte à un répartiteur qui permet de répartir l'air et de le distribuer au bas de la couche du lit coulant (3). De même une entrée (7) d'eau de lavage prévue au voisinage de la paroi (2) au-dessus ou au dessous peut être associée à un répartiteur et permet de distribuer de l'eau pour assurer le lavage de la couche du lit flottant (1). Enfin, une entrée (70) d'air de lavage est prévue au dessous de la paroi (2). Deux sorties de boue de lavage (13,14) sont disponibles respectivement en haut et en bas de l'appareil et sont mises en oeuvre par les vannes respectives (130,140).

L'eau à traiter par le réacteur est introduite par la canalisation (9) et circule de façon ascendante, successivement au travers des deux lits, d'abord le lit flottant (1) puis ensuite le lit coulant (3).

Comme on l'a vu auparavant, la réaction de nitrification nécessite l'apport d'oxygène qui sera distribuée au bas du lit coulant (3) (le lit du dessus) par le répartiteur (8). Ce lit coulant constitue un réacteur triphasique assurant la circulation à co-courant de deux fluides (eau et gaz d'oxydation). Les fluides circulent dans le sens de la décompression du lit (il n'y a donc pas de compactage au fur et à mesure de l'augmentation de la perte de charge pendant le cycle), ce qui évite les difficultés de circulation du gaz (risque d'embolie gazeuse et de passage préférentiel de l'eau ou du gaz) décrites dans l'art antérieur.

Cette réaction de nitrification produit des nitrates. Une fraction du flux traité contenant des nitrates est recyclée par la pompe (2) et la canalisation vers l'entrée du réacteur.

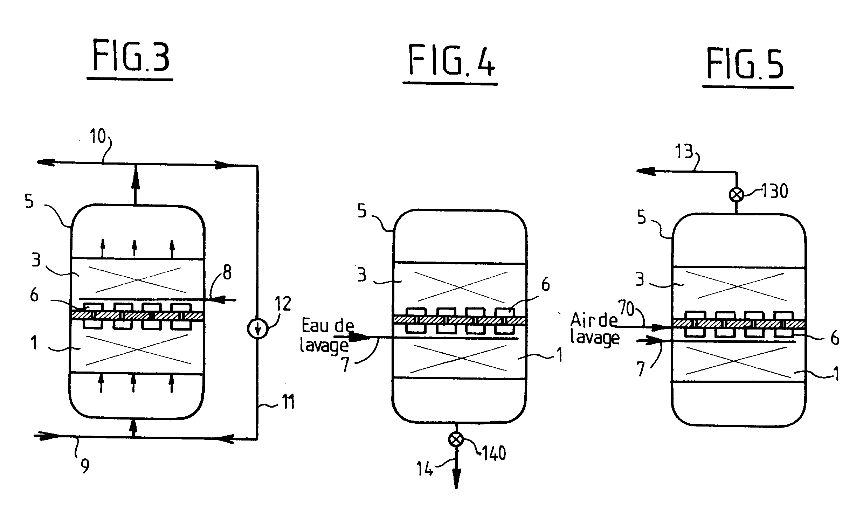

Lors de la biofiltration, on introduit l'air par la canalisation (8), les eaux traitées sont évacuées par la canalisation (10) et le mélange est recyclé vers le bas par la pompe (12) et la canalisation (11), comme représenté à la figure 3.

Le processus de biofiltration est interrompu régulièrement pour effectuer des opérations de lavage des lits du réacteur, lavage qui peut être réalisé selon trois variantes.

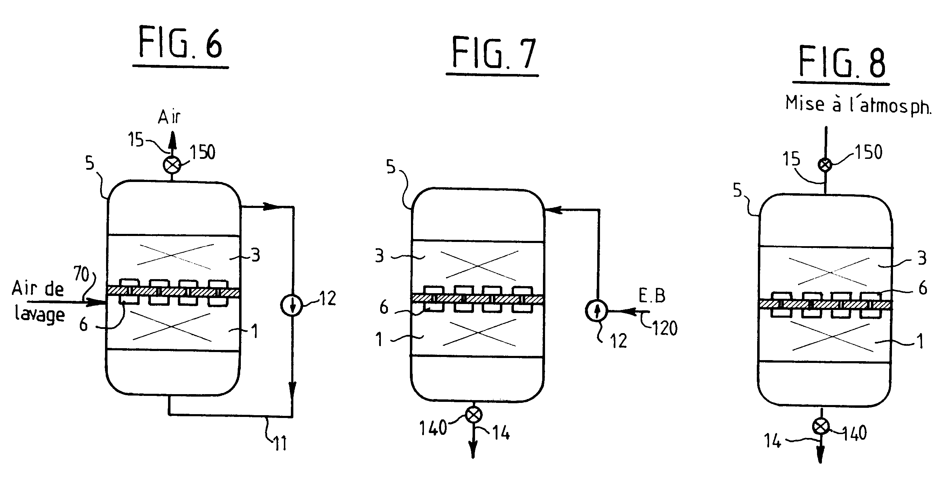

La première variante de lavage représentée par les figures 4 et 5 est réalisée en introduisant de l'eau de lavage par la canalisation (7) entre les deux couches. La sortie des boues de lavage s'effectue par la canalisation (14) si on lave le lit flottant (1) et par la canalisation (13) dans le cas où l'on lave le lit coulant (3). Pour augmenter l'efficacité du lavage, on peut également utiliser de l'air introduit séparément ou simultanément avec l'eau. L'air peut être introduit entre les deux couches de lit flottant et lit coulant, comme représenté à la figure 5, par la canalisation (70).

Une deuxième variante de lavage par accumulation dans le lit flottant est représentée aux figures 6 à 8 en utilisant la circulation externe par la pompe (12) dans la canalisation (11). On réalise d'abord le lavage du lit coulant (3) en envoyant de l'air de lavage dans la canalisation (70) et en faisant circuler l'eau de haut en bas dans la canalisation (11) par la pompe (12). La vanne de l'évent (15) est ouverte. Les matières en suspension issues du lit coulant (3) sont ainsi recyclées vers le lit flottant (1), arrêtées par ce dernier et s'accumulent. A la suite de cette première étape le lit flottant est chargé avec les matières en suspension des deux lits et on réalise son lavage selon une des deux options suivantes.

La première option consiste, comme représenté à la figure 7, à alimenter, par la canalisation (120) la pompe (12) en eau brute pour envoyer l'eau vers le haut de l'enceinte et ouvrir la vanne inférieure (140) d'évacuation vers la canalisation (14) pour assurer une fluidisation du lit flottant. Cette fluidisation est maintenue jusqu'à ce que toutes les matières en suspension soient éliminées.

Une deuxième option consiste, comme représenté à la figure 8, à ouvrir la vanne supérieure (150) de l'évent (15) et la vanne inférieure (140) pour, en utilisant l'eau située au-dessus du lit coulant (3), effectuer une fluidisation combinée à un dénoyage du lit flottant (1) selon le procédé décrit dans le brevet français 2 611 529.

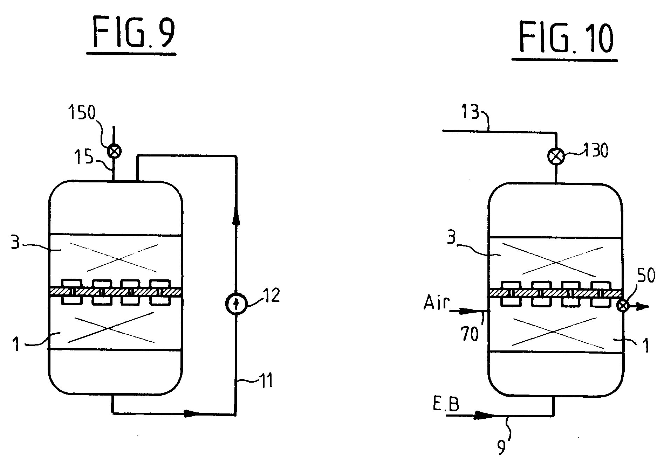

Un troisième processus de lavage à accumulation dans le lit coulant, représenté aux figures 9 et 10, consiste à ouvrir la vanne (150) puis, comme représenté à la figure 9, à mettre en route la pompe (12) dans le sens de circulation allant du bas vers le haut dans la canalisation (11), pour effectuer, par circulation de l'eau de l'enceinte, le lavage de la couche (1) de lit flottant en accumulant les matières en suspension dans le lit coulant (3).

La deuxième étape du processus de lavage consiste, à ouvrir la vanne (130) de la tuyauterie (13), à envoyer de l'air par la canalisation (70) et à laver la couche (3) avec l'eau brute introduite par la canalisation (9), la pompe (12) étant arrêtée. L'eau brute préfiltrée par le lit flottant (1) nettoie le lit coulant (3) et s'évacue par la canalisation (13). Ensuite l'arrivée d'air de lavage est arrêtée par fermeture de la canalisation (70) et l'air est purgé par la vanne de purge (50). Le processus s'achève par une étape de rinçage consistant à introduire de l'eau brute par la canalisation (9) dans la couche (1) puis à reprendre le traitement en fin de rinçage.

Outre l'avantage de permettre la mise en oeuvre de plusieurs procédés de lavage, le réacteur ainsi décrit permet, du fait de la cloison (2) de séparation, d'utiliser des matériaux ayant des granulométries et des densités plus faciles à choisir. De plus, la canalisation de distribution d'air (8) étant au contact de la cloison, sera soumise à moins de contraintes que dans les appareils de l'art antérieur dans lesquels ces canalisations étaient soumises aux efforts des couches de filtration colmatées qui venaient agir directement. Ce réacteur permet également de réaliser un type de lavage sans consommation d'eau propre stockée à l'extérieur.

Enfin, la purge d'air (50) sous le plancher permet d'éviter la conservation d'un matelas d'air après un lavage de la couche supérieure (3) qui aurait pour conséquence de développer un processus de nitrification dans la zone de dénitrification.

Toute modification à la portée de l'homme de métier fait également partie de l'esprit de l'invention.

## Revendications

1. Réacteur d'oxydation et de réduction biologique de liquide à traiter par circulation ascendante et recirculation, comprenant, dans une enceinte (5) longitudinale verticale accessible par une entrée (9) de liquide à traiter et une sortie (10) du liquide traité situées respectivement à l'extrémité inférieure et supérieure de l'enceinte, une couche inférieure (1) de fixation de la biomasse réalisée en matériau de densité inférieure à celle du liquide et une couche supérieure de fixation (3) de la biomasse réalisée en matériau de densité supérieure à celle du liquide, caractérisé en ce que la couche inférieure (1) est séparée de la couche supérieure (3) par une cloison (2) transversale interdisant le passage des matériaux filtrants entre une zone inférieure et une zone supérieure ainsi définies dans l'enceinte, la couche inférieure (1) est située sous la cloison (2), la couche supérieure (3) au-dessus de la cloison (2), une arrivée de gaz d'oxydation (8) prévue sous la couche supérieure (3) et au-dessus de la cloison (2), la sortie (10) du liquide traité est recyclée par une pompe (12) et une canalisation extérieure (11) sur l'entrée (9).

2. Réacteur selon la revendication (1), caractérisé en ce que les micro-organismes constituant la biomasse fixée sur la couche supérieure (3) réalisent une réaction d'oxydation et les bactéries constituant la biomasse fixée sur la couche inférieure (1) réalisent une réaction de réduction.

3. Réacteur selon une des revendications précédentes, caractérisé en ce que la granulométrie du matériau de densité inférieure au liquide est choisie plus grosse que celle du matériau de densité supérieure au liquide, de façon que le lit coulant (3) réalise un effet de filtration.

4. Réacteur selon la revendication 3, caractérisé en ce que le matériau granulaire du lit coulant (3) est constitué, par exemple, par du sable, de l'anthracite, de la pierre ponce, de l'argile expansée, sa taille effective est comprise, préférentiellement, entre 1 et 5 mm et le matériau constituant le lit flottant (1) est constitué, par exemple, de polystyrène expansé, de polypropylène, de mousse de polyuréthanne et sa taille effective est comprise, préférentiellement, entre 1 et 5 mm, le deuxième ayant une taille plus grande que le premier.

5. Réacteur selon une des revendications précédentes, caractérisé en ce que la cloison (2) est en matériau étanche et en ce que des buselures (6) sont prévues à intervalles réguliers dans la cloison (2).

6. Réacteur selon la revendication 5, caractérisé en ce que les buselures (6) sont constituées de chapeaux (62) cylindriques supérieurs formant crépine (61) sur sa périphérie, reliés à un tube central (60) passant à travers la cloison et débouchant dans le compartiment de l'enceinte située sous la cloison par un orifice (600) communiquant avec le lit de matériau flottant (1) par un deuxième chapeau cylindrique (64) formant crépine (63).

7. Réacteur selon la revendication 6, caractérisé en ce qu'un orifice de purge (50) ou d'admission d'air est prévu sous la cloison entre le niveau inférieur de la cloison (2) et le niveau de l'orifice (600) de communication des buselures.

8. Réacteur selon une des revendications précédentes, caractérisé en ce qu'il comprend un évent (150) en haut de l'enceinte, une vanne (130) de sortie d'eau en haut de l'enceinte et une vanne (140) de chasse d'eau en bas de l'enceinte.

9. Réacteur selon une des revendications précédentes, caractérisé en ce qu'il comprend une canalisation d'amenée d'air de lavage (70) et une canalisation d'amenée d'eau de lavage (7) débouchant dans l'enceinte (5) approximativement au niveau de la cloison transversale (2).

10. Procédé de lavage d'un réacteur selon une des revendications 1 à 9, caractérisé en ce qu'il comprend les étapes suivantes :
- Ouverture de l'évent (150), ouverture de la vanne (140) d'évacuation des boues situées en bas de l'enceinte pour évacuer les boues du lit flottant (1).
- introduction d'eau de lavage par une canalisation d'eau de lavage (7) ;
- puis fermeture de la vanne (140) de l'enceinte pour évacuer vers le haut les boues du lit coulant (3) ;

11. Procédé de lavage d'un réacteur selon une des revendications 1 à 9, caractérisé en ce qu'il comporte les étapes suivantes :
- lavage du lit coulant (3) avec circulation des matières en suspension vers la zone inférieure conduisant à une accumulation des matières en suspension dans le lit flottant ;
- lavage du lit flottant (1).

12. Procédé de lavage selon la revendication 11, caractérisé en ce que le lavage du lit flottant est obtenu en alimentant en eau brute la pompe (12) dont le sens de circulation est inversé et en chassant par ouverture de la vanne (140) d'évacuation des boues pour provoquer une fluidisation.

13. Procédé de lavage selon la revendication 11, caractérisé en ce que le lavage du lit flottant s'effectue par chasse rapide provoquant la fluidisation et le dénoyage de ce lit.

14. Procédé de lavage d'un réacteur selon une des revendications 1 à 9, caractérisé en ce qu'il comporte les étapes suivantes :
- circulation de l'eau de l'enceinte par la pompe (12) du bas vers le haut dans la canalisation extérieure (11) pour effectuer le lavage du lit flottant (1) par accumulation des matières en suspension dans le lit coulant ;
- arrêt de la pompe (12) ;
- alimentation en eau brute par la canalisation (9) d'entrée d'eau brute à traiter ;
- alimentation en air de lavage par la canalisation d'amenée d'air de lavage (70) ;
- ouverture de la vanne (130) de la canalisation (13) d'évacuation du trop plein d'air et d'eau ;
- fermeture de l'arrivée d'air de lavage (70) ;
- purge de l'air de l'enceinte par ouverture de la vanne de purge (50).

## Claims

1. Reactor for oxidizing and biologically reducing a liquid to be treated by means of ascending circulation and recirculation in a vertical longitudinal chamber (5) accessible via an inlet (9) of the liquid to be treated and an outlet (10) of the treated liquid, said inlet and said outlet being respectively situated at the lower and upper extremity of the chamber, one lower layer (3) for fixing the biomass made of a material having a density exceeding that of the liquid, wherein the lower layer (1) is separated from the upper layer (3) by a transverse partition (2) prohibiting the passage of filtering materials between one lower zone and one upper zone thus defined in the chamber, the lower layer (1) being situated under the partition (2) and the upper layer (3) above the partition (2), an oxidation gas intake (8) being provided under the upper layer (3) and above the partition (2), the outlet (10) of the treated liquid being recycled by a pump (12) and an external pipe (11) on the inlet (9).

2. Reactor according to claim 1, wherein the micro-organisms constituting the biomass secured to the upper layer (3) produce an oxidation reaction and the bacteria constituting the biomass secured to the lower layer (1) produce a reduction reaction.

3. Reactor according to any one of the preceding claims, wherein the size grading of the material with a density lower than the liquid is selected as being larger than that of the material with a density exceeding the liquid so that the fluid bed (3) embodies a filtering effect.

4. Reactor according to claim 3, wherein the granular material of the fluid bed (3) is formed, for example, of sand, anthracite, pumice stone and light expanded clay aggregate, and its effective size is preferably between 1 and 5 mm, and the material constituing the floating bed (1) is formed, for example, of expanded polystyrene, polypropylene and polyurethane, and its effective size is preferably between 1 and 5 mm, the second material being larger than the first material.

5. Reactor according to any one of the preceding claims, wherein the partition (2) is made of an impervious material and wherein nozzles (6) are provided at regular intervals in the partition (2).

6. Reactor according to claim 5, wherein the nozzles (6) are constituted by upper cylindrical caps (62) forming a strainer (61) on its periphery, said caps being connected to a central tube (60) passing through the partition and opening into the compartment of the chamber situated under the partition via an orifice (600) communicating with the floating material bed (1) via a second cylindrical cap (64) forming a strainer (63).

7. Reactor according to claim 6, wherein a drain orifice (50) or air intake is provided under the partition between the lower level of the partition (2) and the level of the nozzle communication orifice (600).

8. Reactor according to any one of the preceding claims, wherein it includes a vent (150) at the top of the chamber, a water outlet valve (130) at the top of the chamber and a flushing valve (140) at the bottom of the chamber.

9. Reactor according to any one of the preceding claims, wherein it includes an air washing intake pipe (70) and a water washing intake pipe (7) opening into the chamber (5) approximately at the level of the transverse partition (2).

10. Method for washing a reactor according to any one of claims 1 to 9, wherein it includes the following stages :
- Opening of the vent (150) and opening of the valve (140) for removing the sludge situated at the bottom of the chamber so as to remove the sludge from the floating bed (1).
- Introducing washing water by means of a washing water pipe (7) ;
- Closing of the valve (140) of the chamber so as to carry the sludge of the floating bed (3) towards the top.

11. Method for washing a reactor according to any one of claims 1 to 9, wherein it comprises the following stages :
- washing of the floating bed (3) with circulation of the suspended materials towards the lower zone resulting in an accumulation of the suspended materials in the floating bed ;
- washing of the floating bed (1).

12. Washing method according to claim 11, wherein the washing of the floating bed is obtained by feeding the pump (12) with untreated water, the direction of circulation of said pump being inverted, and by flushing by opening the sludge removal valve (140) so as to provoke a fluidization.

13. Washing method according to claim 11, wherein the washing of the floating bed is effected by fast flushing provoking the fluidization and draining of said bed.

14. Method for washing a reactor according to any one of claims 1 to 9, wherein it comprises the following stages :
- having the water of the chamber being circulated by the pump (12) from the bottom to the top in the external pipe so as to wash the floating bed (1) via the accumulation of the materials suspended in the fluid bed ;
- stoppage of the pump (12) ;
- feeding with untreated water by the untreated water inlet pipe (9) ;
- feeding with washing air by the washing air intake pipe (70) ;
- opening of the valve (130) of the pipe (13) for evacuating any excess air and water ;
- closing of the washing air intake (70) ;
- draining the air from the chamber by opening the drain valve (50).

## Patentansprüche

1. Reaktor für biologische Oxidation und Reduktion von Flüssigkeiten zur Behandlung durch aufsteigendes Umwälzen und Rückfördern, der in einem senkrechten länglichen Behälter (5) mit Zugang über eine Eintrittsöffnung (9) für die zu behandelnde Flüssigkeit und einer Austrittsöffnung (10) für die behandelte Flüssigkeit jeweils am oberen bzw. unteren Ende des Behälters eine untere Schicht (1) zum Fixieren der Biomasse aus einem Material, dessen Dichte geringer als die der Flüssigkeit ist, sowie eine obere Schicht (2) zum Fixieren der Biomasse aus einem Material, dessen Dichte größer als die der Flüssigkeit ist, aufweist, **dadurch gekennzeichnet, daß** die untere Schicht (1) von der oberen Schicht (3) durch eine Trennwand (2) getrennt ist, durch die ein Überwechseln des Filtermaterials von der in dem Behälter festgelegten unteren Zone in die obere Zone und umgekehrt verhindert wird, wobei sich die untere Schicht (1) unter der Trennwand (2) und die obere Schicht (3) über der Trennwand (2) befinden und eine Zuleitung für das Oxidationsgas (8) unter der oberen Schicht (3) und über der Trennwand (2) eingeführt wird, während die behandelte Flüssigkeit mit einer Pumpe (12) von der Austrittsöffnung (10) über eine äußere Rohrleitung (11) zur Eintrittsöffnung (9) zurückgefördert wird.

2. Reaktor nach Patentanspruch 1, dadurch gekennzeichnet, daß die auf der oberen Schicht (3) fixierten, die Biomasse bildenden Mikroorganismen eine Oxidationsreaktion bewirken und daß die auf der unteren Schicht (1) fixierten, die Biomasse bildenden Bakterien eine Reduktionsreaktion bewirken.

3. Reaktor nach einem der obengenannten Patentansprüche, dadurch gekennzeichnet, daß die Korngröße des Materials, dessen Dichte geringer als die der Flüssigkeit ist, größer ist als die des Materials, dessen Dichte größer als die der Flüssigkeit ist, sodaß das sinkende Bett (3) eine Filterwirkung hat.

4. Reaktor nach Patentanspruch 3 dadurch gekennzeichnet, daß das körnige Material des sinkenden Bettes (3) beispielsweise aus Sand, Anthrazit, Bimsstein oder expandiertem Lehm besteht, wobei seine Korngröße vorzugsweise zwischen 1 und 5 mm beträgt, und daß das das fließende Bett (1) bildende Material z.B. aus aufgeschäumtem Polystyrol, Polypropylen oder Polyurethanschaum besteht und seine effektive Korngröße vorzugsweise zwischen 1 und 5 mm beträgt, wobei die Korngröße des unteren fließenden Bettes über der des oberen liegt.

5. Reaktor nach einem der obengenannten Patentansprüche, dadurch gekennzeichnet, daß die Trennwand (2) aus wasserdichtem Material besteht und in gleichmäßigen Abständen kleine Düsen (6) in der Trennwand (2) angebracht sind.

6. Reaktor nach Patentanspruch 5, dadurch gekennzeichnet, daß die Düsen (6) aus eine obere zylindrische Abdeckung (62) bestehen, die auf ihrer Außenseite einen Filterkorb (61) bildet und mit einem zentralen Rohr (60) verbunden ist, das durch die Trennwand (2) hindurch und über eine Öffnung (600) in das darunter liegende Gehäuseteil ragt, wobei eine Öffnung (600) hinter einer zweiten zylindrischen Abdeckung (64), die auf ihrer Außenseite einen Filterkorb (63) bildet, den Ausfluß in das fließende Bett (1) ermöglicht.

7. Reaktor nach Patentanspruch 6, dadurch gekennzeichnet, daß eine Entlüftungs- bzw. Belüftungsöffnung (50) unter der Trennwand (2) zwischen deren unterem Rand und der Ausflußöffnung (600) der Düsen vorgesehen ist.

8. Reaktor nach einem der obengenannten Patentansprüche, dadurch gekennzeichnet, daß er eine Entlüftungsöffnung (150) auf der Oberseite des Gehäuses, ein Austrittsventil (130) auf der Oberseite des Gehäuses und ein Ablaßventil (140) auf der Unterseite des Gehäuses besitzt.

9. Reaktor nach einem der obengenannten Patentansprüche, dadurch gekennzeichnet, daß er eine Rohrleitung zum Herbeiführen von Spülluft (70) und eine Rohrleitung zum Herbeiführen von Spülwasser (7) besitzt, die annähernd in Höhe der Trennwand (2) in das Gehäuse (5) einmünden.

10. Verfahren zum Spülen eines Reaktors nach einem der Patentansprüche 1 bis 9, dadurch gekennzeichnet, daß es aus folgenden Phasen besteht:
- Öffnen der Entlüftung (150), Öffnen des Ablaßventils (140) auf der Unterseite des Gehäuses zum Ablassen des im schwimmenden Bett (1) angesammelten Schlammes,
- Einlassen des Spülwassers durch die Rohrleitung zum Herbeiführen von Spülwasser (7),
- Schließen des Ablaßventils (140) zum Entfernen des Schlammes im oberen schwimmenden Bett (3) nach oben.

11. Verfahren zum Spülen eines Reaktors nach einem der Patentansprüche 1 bis 9, dadurch gekennzeichnet, daß es aus folgenden Phasen besteht:
- Spülen des sinkenden Bettes (3) durch Umwälzen der Schwebstoffe in die untere Zone, was zu einer Ansammlung der Schwebstoffe in dem schwimmenden Bett führt,
- Spülen des schwimmenden Bettes (1).

12. Spülverfahren nach Patentanspruch 11, dadurch gekennzeichnet, daß das Spülen des schwimmenden Bettes durch Beschicken der Pumpe (12) mit Rohwasser, deren Förderrichtung umgeschaltet wird, und durch Ausspülen durch Öffnen des Schlammablaßventils (140) zum Bewirken einer Fluidisierung erfolgt.

13. Spülverfahren nach Patentanspruch 11, dadurch gekennzeichnet, daß das Spülen des schwimmenden Bettes durch schnelles Durchspülen erfolgt, wodurch eine Fluidisierung und Sümpfung des schwimmenden Bettes erfolgt.

14. Verfahren zum Spülen eines Reaktors nach einem der Patentansprüche 1 bis 9, dadurch gekennzeichnet, daß es aus folgenden Phasen besteht:
- Umwälzen des Wassers in dem Gehäuse mit der Pumpe (12) von unten nach oben in der äußeren Rohrleitung (11) zum Spülen des schwimmenden Bettes (1) durch Ansammeln der Schwebestoffe in dem fließenden Bett,
- Abschalten der Pumpe (12),
- Beschicken mit Rohwasser über die Eintrittsöffnung (9) für die zu behandelnde Flüssigkeit
- Beschicken mit Spülluft über die Rohrleitung zum Herbeiführen von Spülluft (70)
- Öffnen des Austrittventils (130) der Rohrleitung (13) zum Ableiten von überschüssiger Flüssigkeit oder Luft
- Schließen der Rohrleitung zum Herbeiführen von Spülluft (70)
- Entlüften des Behälters durch Öffnen des Entlüftungsventils (50).
